# EUROPEAN PATENT APPLICATION

(11) **EP 2 717 553 A1**
(43) Date of publication of application: **09.04.2014**
(21) Application number: 13187175.8
(22) Date of filing: 02.10.2013
(51) Int. Cl.: H04M 1/725, G06K 19/073, G06Q 20/32

(54) **A portable near-field communication device**

(30) Priority: 04.10.2012 US 201261709350 P; 04.10.2012 EP 12187142
(71) Applicant: Nagravision S.A., 1033 Cheseaux-sur-Lausanne (CH)
(72) Inventor: Wendling, Bertrand, 01220 Divonne-les-Bains (FR)
(74) Representative: Leman Consulting S.A.

(57) **Abstract**

An embodiment of the present invention may be deployed in a mobile payment device configured to communicate with a payment terminal via an RF near-filed communication channel. The payment device comprises a sensor to detect and log usage parameters corresponding to behaviours of the user of the payment device. Sensors may take the form of any from movement sensors, light sensors or orientation sensors for example. In order to prevent inadvertent execution of a payment instruction from the terminal, the log of parameters created due to the user's behaviours is compared with a predetermined set of parameters compatible with a user's expected behaviours should he be intentionally performing payment behaviours and payment is only authorised if a match is achieved.

## Description

### TECHNICAL DOMAIN

The present invention relates to the domain of portable wireless communications and is of particular relevance where prevention of the use of a portable payment device for performing transactions is required, especially when such use of the portable payment device is attempted without the device owner's consent. The invention may find use in an environment where the portable payment device is configured to operate according to a near-field communication standard (NFC).

### STATE OF THE ART

The state of the art includes a number of different types of contactless portable consumer devices such as smart cards, key fobs, radio frequency identification devices (RFID devices), cellular phones and the like. Such devices are designed to provide convenient mobile payment through a contactless interface simply by placing the device within range of a suitable payment terminal. Such devices are also known as mobile payment devices and form part of the family of what is generally known as mobile wireless communication devices. Ranges are chosen to be suitably short, as opposed to other mobile wireless communication devices such as telephones, and can be up to 20cm. Such ranges are generally described as being short-ranged or near-field and are thus limited in order to provide a certain amount of security, guaranteed simply by the fact that only payment terminals within such range would be capable of communicating with the device. Such devices are typically used for so called micro-payments as a replacement for cash payments amounting to small sums of say up to tens of dollars for example and generally allow for payments to be made without intervention from the card owner or user, unlike other systems where the user is required to enter a PIN code.

Such portable consumer devices however present a problem in that while every effort is made to simplify the execution of such micro-payments, this leaves the device vulnerable to inadvertent execution of payments. For example when such is a device is realised as an near-field communication device (NFC), where the device and the terminal simply have to be within range for a communication to take place, and thereby a payment execution to take place, there is no guarantee that such execution would necessarily be made with the express knowledge of the device owner/user. In a crowded bus for example, just by bumping into a user of a portable consumer device or even from a more remote distance by using a large antenna, it may be possible for an unscrupulous third party to cause his unauthorised payment terminal to enter into collision with the user's device with a force suitable to launch the execution of a payment without the user's knowledge. European Patent Application Publication number 2,315,170 A1 describes the operation of a mobile payment device comprising a smartcard module and a near-field communication module wherein, in order to provide the user of the mobile payment device with a control interface to allow him to prevent or eliminate fraudulent or undesired events. The control interface is provided so that the user can confirm or authenticate his desire to perform a transaction and it may take the form of a GUI. The user's intervention is therefore required in order to authorise a transaction. A timer is used to ensure that authorisation is no longer possible if the user's intervention is not performed within a predetermined time limit.

A portable payment device, which is proposed as a solution to the above problem, is described in United States Patent Application Publication number 2007/0,040,030 A1. This publication discloses a portable payment device which includes a signal-disrupting portion, or shield, which is mounted on the device in such a way that it may be rotated into a first position, which allows RF signal communication between the device and a payment terminal. The shield may further be rotated into a second position which substantially disrupts an RF signal such that communication between the device and a payment terminal may not take place. As long as the user ensures to move the shield to the second position he will be safe from would-be pirates. However, in the case that the device user forgets to move the shield into such a position he is again vulnerable to a piracy attack.

Another approach at solving the problem is proposed in the state of the art in the guise of United States Patent Application Publication number 2008/0,256,642 A1. In this case the author proposes a solution whereby in order for a contactless payment of the type described above to be carried out, it is necessary for the user of the portable payment device to be touching the device in a particular manner while the execution of the payment is being made. In order to accomplish this, the device comprises a suitably positioned fingerprint detector to detect the user's finger, a memory to store an authenticated copy of the user's fingerprint and a processor to analyse the fingerprint detected by the fingerprint detector and to compare the result of the analysis with the stored version, the device allowing the execution to take place only under the condition that the comparison gives a positive result. This solution presents an inconvenience whereby the authenticated user (the user whose fingerprint is stored in the memory), desirous to lend his device to a friend to carry out a micro-payment on his behalf, would either not be able to do so at all or would need to re-programme his device to accept a fingerprint of his friend as being authentic for authorising a payment. Such a system also has the disadvantage that it must include more or less sophisticated means for analysing the fingerprints, with the resulting risks of error depending on the level of sophistication. The mere fact that such complicated authentication needs to be carried out negates the advantage of having a payment device as a convenient and simple means for making micro-payments.

The problem of preventing the unauthorised use of a portable object for making payment transactions is also addressed in United States Patent Application Publication number 2010/0,207,730 A1, which discloses a portable object having at least one on-board sensor configured to allow a transaction to be carried out only when the state of the sensor is modified in a specified manner and in specified proportions. According to this document, the portable object is configured to capture a behaviour and verify that the behaviour matches a reference behaviour stored in memory. For a sensor configured to detect whether the portable object is in a horizontal or a vertical position, a behaviour is described as being a changing for a vertical position (or horizontal position). Other types of sensors are described, such as temperature sensors or torsion sensors. In all cases the behaviour to be verified involves a measurement of a variation of a state as this is said to provide for better security. In order to ensure a high level of security, the reference behaviour is a behaviour which must be actively performed and not simply a behaviour which could be considered a normal behaviour of a person in a passive state i.e. not wishing to make a payment. For example, a reference behaviour is described in the document as being a horizontal displacement of the object from left to right immediately followed by a horizontal displacement of the object from right to left since it is considered highly improbable that a user would carry out such a behaviour naturally i.e. in a passive way.

United States Patent Application Publication number 2009/0,075,592 A1 describes a near-field communication device configured to warn its user that a transaction is being performed or has been performed in order that the user may intervene to either prevent of revoke such transaction should he consider the transaction to be fraudulent. Such warning may be made via a display screen associated with the device.

In United States Patent Application Publication number 2008/0,211,622 A1, a contactless communication chip device, such as an RFID device, is equipped with an accelerometer for detecting a movement of the card and comparing it with a predetermined movement. The object of the invention is to provide a user of the device more comfort in granting access to the device. The user just has to waggle the device, or a bag containing the device in a predetermined way near a payment terminal. Again, this particular document therefore discloses the use of particular changes in position of a device as this is deemed to be more secure than simply detecting a position.

### BRIEF SUMMARY OF THE INVENTION

The above overview of the prior art shows that the state of the art comprises solutions to reduce the risk of a transaction being carried out on a user's portable payment device using short-range wireless communication techniques without the knowledge of the user. This type of attack is generally known as "proximity fraud". The solutions include the addition of a shield to the device, the shield being movable from a protection position to an open position, wherein the user has to ensure that the shield is in the protection position when the device is not to be used. The solutions also include strong authentication to make sure that transactions may only be carried out if the user himself has his finger placed on a specific part of the device allowing his fingerprint to be scanned and analysed. This solution however is resource intensive and could be seen to be overly complicated for a situation where the device is used to facilitate micro-payments. The user may for example lend his device to someone else to make payments on his behalf, in which case the level of protection required would simply be that the person who will make the payment in the end, whether it be the user or the user's proxy, should simply be aware that a payment is being made using the device. Other solutions in the prior art include the detection of particular behaviours involving changes in position or changes in temperature or changes in torsion experienced by the payment device. Yet other solutions involve providing the device owner with a warning that his device is being used or has been used to perform a transaction, and may include requiring the owner's intervention in authorising the transaction, by typing a code or pressing a key.

By "micro-payments" it is understood that such payments represent small values and therefore less stringent security is required regarding authorisation/authentication of who issues the payment. The main object again is just that the user of the device be aware or at least conscious of the fact that a payment is being made.

In view of the existing prior art therefore, there remains a need to have a simple yet effective means for preventing the execution of payments between a portable payment device and a payment terminal without the knowledge of the user of the device. What is required is a cheap, simple solution allowing the user to retain the simplicity of payments afforded by such devices while providing adequate security such that the user knows when a payment is about to be made and wherein the user does not have to remember to engage or release any protection mechanisms. To this end the present invention provides for a portable near-field communication device for performing at least one transaction between the device and a payment terminal, the device comprising:
an antenna at least for receiving a radio frequency signal from the payment terminal, the radio frequency signal comprising at least one instruction to perform the transaction;
a processor configured at least to process the instruction;
an orientation sensor; and
a movement detector for informing the processor whether the device is stationary or not;
   the device **characterised in that**:
the orientation sensor is configured to inform the processor at which angle the device is being held with respect to a predetermined plane; and
the processor is further configured to compare the angle at which the device is being held with a predetermined angle and to allow the transaction to be performed only when said comparison gives a positive result.

According to another aspect of the present invention, provision is made for a payment terminal for communicating with a near-field communication device, the payment terminal having a payment surface, **characterised in that** the receiving surface is configured such that the near-field communication device, when placed on the payment surface, is oriented at a predetermined angle with respect to a predetermined reference plane.

According to yet another aspect of the present invention there is provided a system comprising a payment terminal as described above and a portable near-field communication device as described above.

According to a still further aspect of the present invention, there is provided a method for performing at least one transaction between a portable near-field communication device as described above and a terminal as described above, the method comprising the steps of:
detecting, by the portable near-field communication device, a radio frequency signal from the payment terminal, the radio frequency signal comprising at least one instruction to perform the transaction;
measuring, by the portable near-field communication device, an angle at which it is being held;
comparing, by the portable near-field communication device, the angle at which it is being held with a predetermined angle;
allowing, by the portable near-field communication device, the transaction to go ahead only when the comparison gives a positive result.

### BRIEF DESCRIPTION OF THE DRAWINGS

The present invention will be better understood thanks to the detailed description which follows and the accompanying drawings, which are given as non-limiting examples of embodiments of the invention, wherein:
Figure 1 illustrates a system comprising a payment device in which an embodiment of the present invention may be deployed.

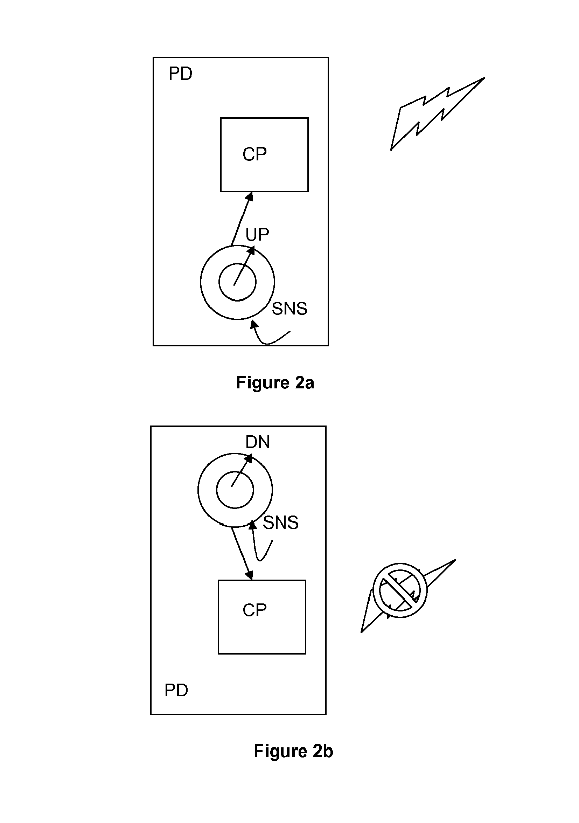

Figure 2a and Figure 2b illustrate a portable payment device comprising an orientation sensor, where the portable payment device is in an orientation in which a transaction is allowed and in an orientation in which a transaction is disallowed, respectively according to embodiments of the present invention;

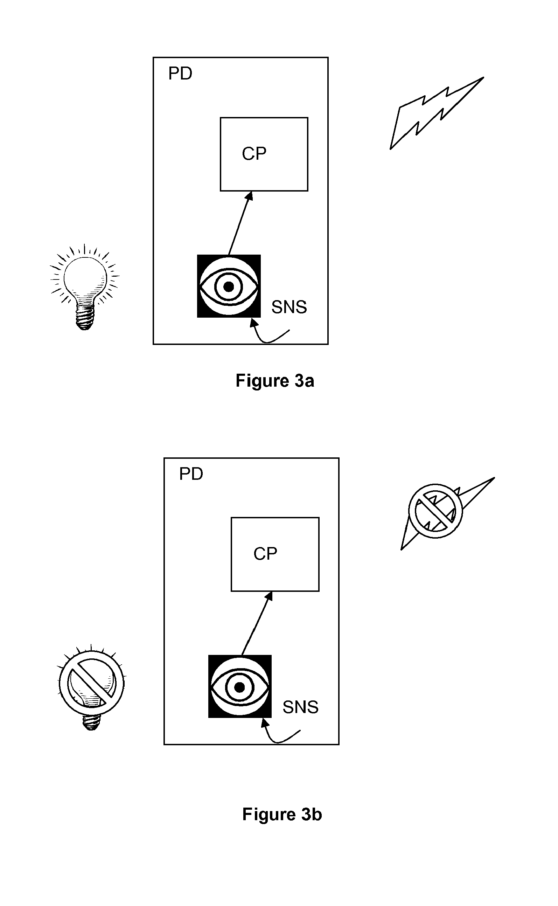

Figure 3a and Figure 3b illustrate a portable payment device comprising a light sensor, where the portable payment device is in an environment in which a transaction is allowed and in an environment where a transaction is disallowed, respectively according to embodiments of the present invention.
Figure 4 illustrates the use of a payment terminal with a payment device on which an embodiment of the present invention may be deployed, the payment device being housed in a wallet.

### DETAILED DESCRIPTION

It is desirable for a user of a portable payment device for recording or otherwise accounting for a transaction or purchase in respect of goods received or services rendered, the portable consumer device being in the form of a card, a key or an RFID device, for example, comprising contactless communication means towards a terminal, to be able to take advantage of the flexibility and simplicity afforded by such devices in respect to the ease of carrying out such transactions. Usually such devices are used to perform micro-payments i.e. payments which involve small sums of money in the range of from a fraction of a dollar to a few tens of dollars for example. For such small sums it is generally felt that the strong security usually associated with events involving the transfer of hundreds or thousands of dollars for example, may be forfeited in exchange for ease of use. It is thus desirable to have a relatively simple form of security around these portable payment devices while allowing simple recording or otherwise accounting for such small transactions. Another example of a portable payment device according to the present invention is a mobile telephone, wherein the contactless communication means referred to above is a near-filed communication means which is different from the wireless communication means used to perform telephone conversations or data communications using SMS or internet-based communication means.

According to a first embodiment of the present invention, an aim is to prevent an unscrupulous third party having a terminal configured to be able to enter into communication with a nearby portable payment device from doing so in a fraudulent manner. By fraudulent manner it means in a manner which would cause the portable payment device to execute a payment without any goods or services being provided as a result of the transaction or simply in a manner whereby the user of the portable payment device is simply not aware that such a transaction has taken place or has otherwise not intended to make the transaction or authorise the transaction to be made.

To this end there is provided a portable payment device comprising a contactless interface such as an RF wireless interface configured to be able to receive RF signals from a payment terminal within a range of up to some 10's of centimeters for example. Such payment devices, otherwise called portable proximity wireless communication devices, are known and include devices such as NFC compatible devices (Near Field Communication) for example. Such a device may therefore be known as a near-field communication device. As is generally known, proximity communication devices described above are not configured to be able to function across distances larger than a few 10's of centimeters. Nevertheless, if an unscrupulous third party wanted to establish a communication channel with one such proximity communication device without the knowledge of the user of the device, then the third party could find advantage in using a "pirate" payment terminal adapted with a much larger antenna to operate at ranges well above the intended range of an NFC device for example. In such cases he could use a terminal with an antenna adapted to operate at up to several metres in range from the payment device. The third party would then advantageously be able to avoid arousing suspicion simply by not being present within the range expected for an intentional communication channel to be established. According to the present invention the device further comprises a sensor. In all embodiments of the present invention the sensor can be described as being an environment sensor in the sense that it is configured to sense at least one effect brought about by the user's environment or his passive behaviour. By passive behaviour it is meant behaviour not actively performed with the direct goal of causing the sensor to register an effect. Passive behaviours detectable by environment sensors according to the present invention therefore exclude behaviours such as clicking on an "OK" button, allowing a retina scan to be taken or any other behaviour whose intent is primarily to provide authentication or otherwise generate the effect in the sensor. Environment sensors are adapted to sense, for example, movement which is part of a movement someone would normally make when intending to make a payment, ambient light, how the device is held (upside down or right way up - i.e. including position/orientation and angle), how long the device is held in a certain position or where the person is standing at the time of payment - in front of a known payment terminal or elsewhere.

According to an embodiment of the present invention, the sensor is a light detector for example. In normal use it is assumed that during the time that a payment device is in a pocket, it can be assumed that the user does not intend to use his portable payment device to carry out a transaction. The device is therefore configured to block any transactions which a payment terminal within the required range may attempt to initiate or otherwise perform an execution of a payment while the device does not receive light above a predetermined threshold, under the assumption that if the device is in a pocket or otherwise out of view, then the user probably does not intend for the device to perform any payments. The blocking may be performed by acting on the receiver or the processor to stop the transaction being carried out whenever the signal from light detector or other means for detecting light is below a predetermined threshold. Light levels above the predetermined threshold would correspond to a user not concealing his payment device in a pocket or a wallet for example and therefore giving consent for a payment to be made or at least being aware that a payment is being made. According to an embodiment of a system comprising a payment terminal and a payment device (near-field communication device) adapted according to an embodiment of the present invention, the payment device comprising a light sensor, the payment terminal could be configured to emit light, thus ensuring that the payment device will receive a certain amount of light. According to one embodiment, the payment terminal may be configured to emit light of a predetermined frequency (i.e. colour or infra-red or ultra-violet for example). The light emitted by the payment terminal could be arranged to blink at a predetermined rate. All of these features aid in allowing the payment device to positively identify the payment terminal as being a legitimate payment terminal, thereby enabling the payment device to allow or to deny the transaction depending on a test of whether the detected light corresponds to light having predetermined characteristics or not.lt is worth noting that light having such specific features would not be detected by the payment device should the payment device be stowed in a bag or a pocket. According to another embodiment of the present invention, a geographical position detector such as a GPS detector can be used as a sensor. The GPS detector can give a reading of the device's geographical position whenever a command to make a payment is received. By having the processor compare the read position with a predetermined list of positions of trusted payment terminals it can be ensured that the payment is only allowed if the actual reading matches a position of one of the trusted payment terminals, thereby indicating that the user is near a payment terminal and therefore any payment made at that time is likely to be carried out with the user's knowledge. Payment is blocked if the reading from the GPS detector gives a position which does not correspond to a trusted payment terminal.

According to still another embodiment of the present invention, the sensor could be a movement detector, such as an accelerometer, to detect whenever the payment device is moving. Since under normal circumstances, when the user wishes to make a transaction he will normally be in a position near a payment terminal, holding the payment device in a manner where the terminal and the device will be able to communicate with each other. As such, the user, and therefore the device will be stationary. The device is configured such that if the sensor detects movement, then the transaction is not allowed to take place. It is assumed that a user on the move is not expecting to use his payment device to make a transaction and so if the sensor detects movement, then transactions are blocked.

According to yet another embodiment of the present invention the sensor is an orientation detector. In the case where the payment device were comprised on a credit card shaped card, for example, it is reasonable to assume that while in a pocket or in a wallet the card would not be in a horizontal position or orientation for example. It would therefore be convenient to include a simple constraint in a method for making transactions using the payment device, that the device be held in a horizontal orientation during the transaction thus ensuring that the user need actively participate in making the transaction and thereby minimising the risk of a transaction being carried out without his knowledge. A payment device could be comprised on a credit card sized card or within a mobile phone for example. It is therefore usual to expect that when the device is concealed, indicating that the user has not specifically prepared it to perform a transaction, the device will most probably not be in a horizontal orientation since such an orientation, inside a pocket or a wallet, would be very uncomfortable for the user. The orientation detector could be used to provide detection of whether or not the user is holding the device at a particular predetermined angle with respect to a plane of the payment terminal or with respect to any other predetermined angle or plane. For example, the terminal is at 45 degrees to the horizontal and the device should be held parallel to the plane of the terminal with a tolerance of 10 degrees for payment to be allowed. Both orientation detectors and movement detectors are known in the state of the art and may be conveniently made using an accelerometer for example.

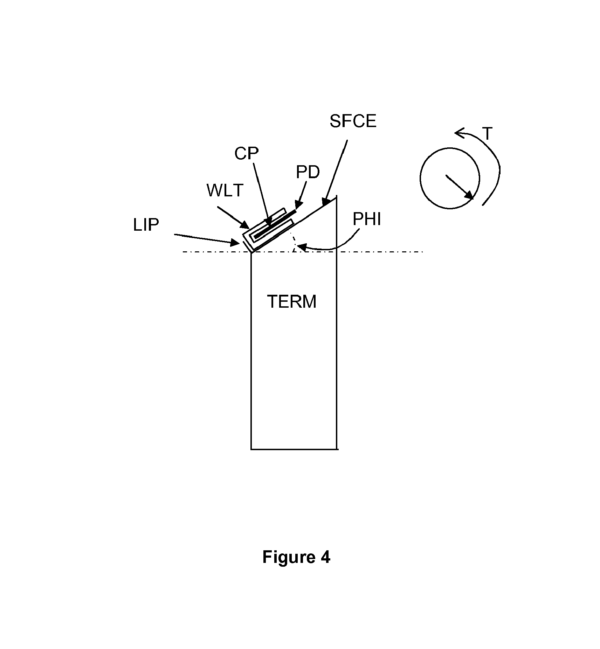

In keeping with the example mentioned above, where the it is assumed that the user would not hold the payment device in a horizontal position or a vertical position when he is trying to actively make a payment, the device could be configured to refuse any operations or transactions while the orientation detector signals that the device is being held in either of a horizontal position or a vertical position. Furthermore, the device (PD) could be further configured to only allow an operation or transaction to be carried out when the device (PD) is being held at a particular angle (PHI). According to this embodiment, payment terminals (TERM) are provided with a reception surface (SFCE) as shown in Figure 4. All legitimate payment terminals are made so that their reception surfaces present a predetermined angle (PHI) with respect to a given (predetermined) reference plane, the given reference plane being horizontal or vertical for example. It is required that a user wishing to make a payment should place his payment device (PD) or a wallet (WLT) containing the payment device (PD) on the reception surface of the payment terminal. This is considered to be a gesture which is still corresponds to an acceptable level of convenience in the use of proximity payment devices while providing a suitable level of security. The payment device comprises means for comparing the angle of the payment device with a predetermined angle (PHI) when a command to make a transaction is received, the angle being received from the orientation sensor, and further comprises means for allowing the transaction to go ahead only if the angle matches the predetermined angle to within a predetermined tolerance. As mentioned, the predetermined angle should preferably not correspond to the device being held either horizontally or vertically, neither should the predetermined angle be any angle which could be considered to be any other commonly used angle. The predetermined angle, according to a variation, may be chosen such that a payment device placed at that angle would be close to being unstable in the sense that should it not be placed on the surface of a payment terminal having that angle, thereby providing sufficient support to maintain it at that angle, the payment device would be likely to move away from that angle. In this sense it may be considered that it would not be possible for the payment device to be maintained at that angle unless it was being supported by the reception surface of a legitimate payment terminal. Only when the payment device is maintained at the predetermined angle will the transaction be authorised. A processing unit such as a CPU would be a suitable means for comparing angles and may further serve as a suitable means for allowing the transaction to go ahead or for preventing the transaction from going ahead.

Figure 4 shows a lip (LIP) associated with the payment surface (SFCE). The lip can be useful in holding the payment device on the payment surface when the angle of the payment surface is steep and the adherence between the payment surface and the payment device is not sufficient to hold the payment device on the payment surface. The predetermined angle may therefore be steep when the payment terminal has such a lip. On the other hand, when payment surface of the payment terminal has no lip or a smaller lip, the predetermined angle should be small enough to guarantee that the payment device can lie on the payment surface in a stable manner.

According to a variation of this embodiment, it may be required that the user place his payment device or a wallet containing the payment device on the payment surface of the payment terminal for a predetermined length of time, say for two to three seconds, before the transaction will be allowed by the payment device. The payment device therefore comprises a movement detector, such as an accelerometer, for detecting when the payment device stops moving and starts moving again and it further comprises a timer to record the length of time the card does not move. Consequently, it can be deduced that when the payment device is at the predetermined angle, the length of time that the payment device does not move is equal to the length of time that the payment device is placed on the payment surface of the payment terminal. Using the processor on the payment device, the device can compare the actual time the device was placed on the payment terminal's payment surface (and therefore at the correct angle) and to authorise the transaction if the length of time is at least the predetermined length of time. Combined with the variation where the predetermined angle is chosen to a an angle which is considered to be unstable, as described above, a payment device which is not able to be maintained at the predetermined angle for the predetermined length of time would be considered not to be placed on the payment surface of a legitimate payment terminal and so a transaction would not be authorised under such conditions.

According to another embodiment, which may be combined with any of the embodiments above which use the payment terminal with the payment surface, a measurement of electrical field strength can be made by a suitable sensor on the payment device. If the field varies during a transaction then it can be considered that the payment device is varying in distance with respect to the payment terminal and so is not properly placed on the payment terminal. A variation of electric field over a predetermined time, as measured by the payment device's timer, the variation being outwith a predetermined acceptable variation, would then lead to a blocking of any transaction. The transaction would be allowed to go ahead when the variation of the electrical field over time is within the predetermined acceptable variation. By having a predetermined threshold value for electrical field, the processor can check whether the measured electrical filed is high enough for it to be considered that the payment device is actually placed on the reception surface of the payment terminal. Transactions will only be allowed when the electrical field is strong enough for the payment device to be sufficiently close to the payment terminal that it may be considered that the payment device is resting on the payment surface of the payment terminal. The payment device may further have access to a predetermined maximum allowable electrical field threshold, this value being set to a value which is higher than may be produced when the payment device is placed appropriately on a legitimate payment terminal. In this manner the payment device may be configured to disallow a transaction should the detected electrical field strength be higher than this maximum threshold, meaning that a pirate device using a strong signal may be responsible for creating such a high electrical field.

Another embodiment of the present invention, which is made possible by combining the notions of movement and orientation, both described above, uses the assumption that the user of the payment device may actively remove his device from a pocket or a bag and present it near the payment terminal indicating that at that time he is aware that payment is being made or is about to be made with his device. In such a case, the device is configured to allow payment only if a movement is first detected, followed by no movement and provided that the device is detected as being held in a predetermined orientation and to block payment if the combination of those conditions is not met. Predetermined times for how long movement is detected, how long no movement is detected and how long the device is held in the predetermined orientation can be programmed into the device to be included in the combination. Similar combinations can be made by including detection parameters related to geographical position.

According to another embodiment of the present invention, the presence or absence of an RF field for carrying the signal giving the instruction could be used at least as one of the effects to be sensed from sensors. This information could be combined with information from other sensors as described above. For example, to prevent a case of false payment due to an unscrupulous third party using a "false" payment terminal having a long range field to send a payment instruction to a payment device while the user of the devices passes by on a train for example, it could be required that the various detectors detect the following sequence of behaviours for example: absence of NFC signal and device moving; presence of NFC and device stops moving; payment signal then received.

In more general terms, given that a portable wireless communication device suitable for use in carrying out a transaction with a payment terminal will usually be carried on a user's person, either in a pocket, in a bag or in a wallet for example, the user will exhibit a certain number of behaviours depending on what he is doing and, if the portable device is suitably fitted with one or more appropriate sensors, such behaviours will cause the sensor(s) to produce one or more effects which can be logged by the device. These behaviours may be described as non-payment behaviours. Moreover, if the user is actively and knowingly carrying out a transaction with his payment device he may exhibit any from a restricted number of predetermined behaviours, any or all of which he would not exhibit if he were not actively carrying out a transaction using his payment device. These behaviours are described as being payment behaviours. According to embodiments of the invention then, a predetermined set of payment behaviours are defined as forming part of normal behaviour while carrying out a transaction using a payment device. Alternatively, or in combination, a second predetermined set of behaviours are defined as forming part of abnormal behaviours while carrying out a transaction using a payment device or simply as non-payment behaviours. It is convenient and sufficient then to arrange for a portable device, fitted with one or more appropriate sensors, to detect the user's behaviours and to compare them with a predetermined set of payment behaviours and to allow the device to execute a requested transaction and to disallow execution of the requested transaction if the user's behaviours do not match the predetermined payment behaviours. On the other hand, if the device detects any from the set of non-payment behaviours, then it could be arranged for the device to prohibit the transaction from being executed. In this way payments are allowed if the device determines that the user's behaviours correspond to a normal payment behaviour pattern and blocked if the device determines that the user's behaviours do not correspond to a normal payment behaviour pattern.

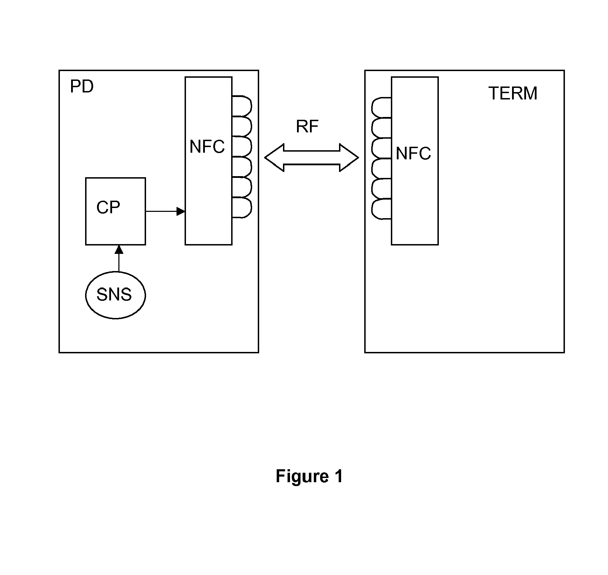

Figure 1 shows a block diagram of a system in which an embodiment of the present may be deployed. According to such an embodiment of the present invention, the transaction is carried out via a communication link which is established between the portable wireless proximity communication device and a payment terminal. The communication link is a radio frequency (RF) link of a near-field communication type (NFC). The device therefore comprises a near-field RF communication module. The payment terminal also comprises a near-field communication module. During communication, wireless RF coupling is established between the device and the terminal using coupling elements in the terminal and in the device. The coupling elements may be of capacitive type, inductive type or electromagnetic type. In the case of an embodiment configured to communicate using NFC, such coupling is electromagnetic, using inductive coupling. Typically, a coupling element is an antenna, generally a loop, configured to generate or to receive an RF signal. The antenna can therefore generate a magnetic field and coupling can be established between the device's antenna and a payment terminal's antenna. RF frequencies in the 10's of Megahertz range are generally used.

According to yet another embodiment, the payment device may be comprised within a portable telephone. According to any of the embodiments described, the device may further comprise a memory at least to store data related to the predetermined behaviours. The data related to the predetermined behaviours may be in encrypted format to prevent third parties form obtaining access to it. In this case the device would also comprise a decryption module. The device may further comprise a security module at least to store decryption keys to decrypt the encrypted data related to the predetermined behaviours. It follows then that the near-field communication device (PD) may comprise a memory in which the predetermined angle (PHI) is stored in an encrypted fashion. Similarly, the predetermined time (T) may be stored in the memory in encrypted fashion.

According to another embodiment, where the payment device (PD) has access to a predetermined angle, such predetermined angle may either be stored, either encrypted or in clear, in a memory associated with the payment device. On the other hand, the predetermined angle may be stored outwith the payment device and be transmitted to it in encrypted fashion, for example by the payment terminal. Legitimate payment terminals, in this case, are configured to store the value of the angle of their payment surface in an encrypted fashion, and to pass the encrypted value to the payment device as part of the command to perform the transaction. The payment device can then decrypt the predetermined angle before comparing the actual angle with the decrypted value and deciding whether or not to allow the transaction.

The sensor will register a certain number of effects depending on the user's behaviours. The device according to the invention is configured to create a log of these effects and to compare at least part of the log with the stored predetermined effects corresponding to expected payment behaviours or expected non-payment behaviours.

In use, the payment device functions as follows: a set of predetermined characteristics corresponding to behaviours deemed to be compatible with performing a payment using the payment device is stored in encrypted format in a memory in the payment device; a log of user's actual behaviours is kept in a log memory of the device, the log being based on output from the sensor; when a terminal within the near-field range enters into communication with the payment device and attempts to cause the device to perform a payment, at least part of the log of user's actual behaviours is compared with the stored predetermined behaviours using the security module at least to provide the decryption key to decrypt the stored predetermined behaviours; if the part of the log corresponds to the predetermined behaviours, then payment is allowed. If the compared actual behaviours do not correspond with the predetermined behaviours, then payment is blocked.

## Claims

1. A portable near-field communication device (PD) for performing at least one transaction between the device (PD) and a payment terminal (TERM), the device (PD) comprising:
an antenna (ANT) at least for receiving a radio frequency signal from the payment terminal (TERM), the radio frequency signal comprising at least one instruction to perform the transaction;
a processor configured at least to process the instruction;
an orientation sensor (SNS); and
a movement detector for informing the processor whether the device is stationary or not;
the device (PD) **characterised in that**:
the orientation sensor (SNS) is configured to inform the processor at which angle the device is being held with respect to a predetermined plane; and
the processor is further configured to compare the angle at which the device is being held with a predetermined angle (PHI) and to allow the transaction to be performed only when said comparison gives a positive result.

2. The portable near-field communication device (PD) according to claim 1, wherein it further comprises a timer configured to inform the processor as to how long the device (PD) is being held stationary, the processor being further configured to compare how long the device is being held stationary with a predetermined time (T) and to allow the transaction to be performed only when said comparison gives a positive result.

3. The portable near-field communication device according to either of claims 1 or 2, wherein the processor is further configured to disallow the transaction from being performed if the comparison is negative.

4. The portable near-field communication device according to any of the preceding claims, wherein the predetermined time (T) or the predetermined angle (PHI) are stored in a memory of the device in an encrypted format.

5. The portable near-field communication device according to any of the preceding claims, wherein the device further comprises a security module to store at least one decryption key to decrypt the predetermined angle (PHI) or the predetermined time (T).

6. The portable near-field communication device according to any of the preceding claims, wherein the antenna is a wire loop configured at least to detect the radio frequency.

7. The portable near-field communication device according to any of the preceding claims, wherein the antenna is configured to receive the radio frequency signal up to a distance of 20 cm from the payment terminal.

8. The portable near-field communication device according to any of the preceding claims, wherein it further comprises an electric field strength detector configured to inform the processor of the strength of the electrical field between the payment terminal and the portable near-field communication device, the processor being further configured to compare the strength of the electrical field with a predetermined electrical field strength and to allow the transaction to be performed only when said comparison gives a positive result.

9. The portable near-field communication device according to any of claims 2 to 7, wherein it further comprises an electric field strength detector configured to inform the processor of a variation in the strength of the electrical field between the payment terminal and the portable near-field communication device over the predetermined time (T), the processor being further configured to compare the variation in the strength of the electrical field over the predetermined time with a predetermined variation in electrical field strength and to allow the transaction to be performed only when said comparison gives a positive result.

10. A payment terminal for communicating with a near-field communication device, the payment terminal having a payment surface, **characterised in that** the receiving surface is configured such that the near-field communication device, when placed on the payment surface, is oriented at a predetermined angle with respect to a predetermined reference plane.

11. The payment terminal according to claim 10, wherein said predetermined reference plane is one of a horizontal plane or a vertical plane and said predetermined angle is non-zero.

12. A system comprising a payment terminal according to claim 10 and a portable near-field communication device according to claim 1.

13. A method for performing at least one transaction between a portable near-field communication device according to claim 1 and a terminal according to claim 10, the method comprising the steps of:
detecting, by the portable near-field communication device, a radio frequency signal from the payment terminal, the radio frequency signal comprising at least one instruction to perform the transaction;
measuring, by the portable near-field communication device, an angle at which it is being held;
comparing, by the portable near-field communication device, the angle at which it is being held with a predetermined angle;
allowing, by the portable near-field communication device, the transaction to go ahead only when the comparison gives a positive result.

14. The method according to claim 13, wherein it further includes the steps of:
measuring, by the near-field communication device, a length of time that it is held stationary;
further comparing, by the near-field communication device, the length of time that it is held stationary with a predetermined time (T);
allowing, by the near-field communication device, the transaction to go ahead only when the result of the further comparison is also positive;

15. The method according to either of claims 13 or 14, wherein it further includes the steps of:
measuring, by the near-field communication device, a strength of electrical field between the near-field communication device and the payment terminal;
still further comparing, by the near-field communication device, the strength of electrical field with a predetermined electrical field strength;
allowing, by the near-field communication device, the transaction to go ahead only when the result of the still further comparison is also positive;
